Europäisches Patentamt

European Patent Office

Office européen des brevets

(11) Publication number: **0 164 171**
A1

# EUROPEAN PATENT APPLICATION

(21) Application number: 85200838.2

(22) Date of filing: 23.05.85

(51) Int. Cl.⁴: **F 16 L 41/08,** F 16 K 31/06, F 16 K 27/00

(30) Priority: 24.05.84 NL 8401658

(43) Date of publication of application: 11.12.85 Bulletin 85/50

(84) Designated Contracting States: CH DE FR GB LI NL

(71) Applicant: B.V. KONINKLIJKE MAATSCHAPPIJ "DE SCHELDE", Glacisstraat 165 P.O. Box 16, NL-4381 SE Vlissingen (NL)

(72) Inventor: Herrebout, Cornelis Abraham, Singel 350, NL-4381 VP Vlissingen (NL)
Inventor: van Sluijs, Johan Marinus, Singel 275-277, NL-4381 VP Vlissingen (NL)

(74) Representative: van der Beek, George Frans et al, Nederlandsch Octrooibureau Johan de Wittlaan 15 P.O. Box 29720, NL-2502 LS 's-Gravenhage (NL)

(54) **Shutoff device for a pipe.**

(57) Shutoff device for at least one pipe (3), where this pipe (3) debouches into a pipe flange (1), which device comprises a movable valve (4) which can close and open the entrance to the debouchment of the pipe (3) into the pipe flange (1) mechanical shifting elements (5-8; 12-17) for the valve (4), which can be locked against spring force in a position in which the valve (4) is open; electromagnetic elements which can remove the locking of the mechanical elements and of the valve; in which the valve (4) the mechanical shifting elements (5-8; 12-17) and the electromagnetic elements are carried by and at least partially accomodated in the pipe flange (1) or in an intermediate plate (18) fitted against it, and means are present to permit observation of the position of the valve from the outside and to permit deliberate opening thereof again after it has been taken to the closed position through excitation of the electromagnetic elements.

1

Shutoff device for a pipe

The invention relates to a shutoff device for at least one pipe, where the latter debouches into a pipe flange or pipe plate.

There are plants where a large number of vessels are connected to each other by means of pipes and collecting pipes. In general, such pipes are connected with pipe flanges or pipe plates, for exampled welded to them, said flanges or plates being fixed on the vessels. Such plants are used, for example, in process technology.

If a fault occurs in one of the vessels and undesirable products are discharged, it is important that such products should be confined to this one vessel, so that they cannot go into the connected pipes and other vessels connected via these pipes, thereby contaminating them. This applies in particular to plants in which gaseous contamination products can spread rapidly through the whole pipe system and can reach other vessels.

There is therefore a need for a shutoff device by means of which such vessels in which the undesirable reaction products are produced - and if necessary also all other vessels connected by means of the pipe system - can quickly be shut off, and where it must be seen clearly which vessel(s) is (are) shut off. With the aid of, for example, suitable detectors, it can then be established if necessary which vessel was shut off first. In that case, it is often only necessary to take out of service this one vessel in which the fault has occurred. Not until this has been done may other shutoff devices which are closed be opened again, preferably deliberately by hand.

The invention now produces a shutoff device which meets the above-mentioned requirements, and which is characterised by:

a movable valve which can close and open the entrance to the debouchment of the pipe into the pipe flange;

mechanical shifting elements for the valve, which can be locked against spring force in a position in which the valve is open;

electromagnetic elements which can remove the locking of the mechanical shifting elements and of the valve;

in which the valve, the mechanical shifting elements and the electromagnetic elements are carried by and at least partially accommodated in the pipe flange or in an intermediate plate fitted against it, and means are present to permit observation of the position of the valve from the outside and to permit deliberate opening thereof again after it has been taken to the closed position through excitation of the electromagnetic elements.

The present invention deliberately selects for the shutoff device a place where the pipe(s) debouch(es) by means of the pipe flange or pipe plate in a vessel or housing, since this provides the greatest possible protection of the connected pipes and other devices. Moreover, in consideration of the available space, such a shutoff device can be fitted simply here, including also the elements by which the position of the valve of the shutoff device can be observed from the outside, and by means of which this valve can be opened again by hand. The combination with the flange or intermediate plate also has the advantage that, if necessary, after the shutting off of the pipe(s) a vessel or housing can easily be taken out of service or changed, without pipes which may be welded having to be detached. The complete shutoff unit, for example, the intermediate plate with the parts accommodated in it, is also easy to replace.

It is also an advantage that the valve can be closed only by spring force. For this purpose, the electromagnetic elements need be excited only briefly, for example using a capacitor pulse. After closure of the valve, this can be observed clearly from the outside, while opening has to be carried out deliberately.

According to a first preferred embodiment of the shutoff device according to the invention, the valve is fitted on one end of an arm, which is supported in an intermediate point so as to rotate or swivel, in such a way that through the rotation or swivelling of said arm the valve can be shifted to and from the entrance to the debouchment or the debouchment itself. The other end of said swivelling arm can then be conveyed, for example by means of bellows sealed in a gastight fashion, outside the pipe flange, the pipe plate or the intermediate plate and can be locked here by means of a stop against spring force, in such a way that the valve is held in the open position. The said stop is operated by the electromagnetic elements. The spring force can be taken from a spring which, for example, works in conjunction with the end of the swivelling arm on which the valve is fitted. The valve can shut off the debouchment of the pipe itself, or also an opening in the intermediate plate which gives access to the debouchment.

The free end of the swivelling arm can also work in conjunction with a bar which is fitted transversely to it and is conveyed gastight to the outside, and with the free end of which the said stop can again work together. The gastight passage can again comprise cylindrical bellows, which are preferably fitted on a concave connecting piece, whose cavity is in line with the recess of the swivelling arm, said connecting piece being again fitted so as to be gastight on the pipe flange or on the intermediate plate.

According to a further preferred embodiment of the invention, the shutoff device is characterised in that the valve is carried by one end of a first swivelling arm, whose other end is rigidly connected to a rotating coupling shaft transverse to this first swivelling arm, so that through the rotation of said coupling shaft, the first swivelling arm can execute a swivel movement for the desired movement of the valve to the closed position or the open position, said rotating coupling shaft being taken via sealing elements outside the pipe flange, pipe plate or intermediate plate, and in its external end being rigidly connected to a second swivelling arm whose free end works in conjunction with a movable stop and by means of said stop can be held against spring force in a position in which the valve is open, said stop being capable of being pulled by the above-mentioned electromagnetic elements outside the holding position, in which case the spring elements can move the above-mentioned assembly of swivelling arms, valve and rotating coupling shaft to a position in which the entrance to the debouchment of the pipe is shut off.

The spring elements can be constituted by a compression or draw spring, one end of which is connected to the free end of the second swivelling arm, while the other end is connected to a fixed point of the pipe flange, pipe plate or intermediate plate. A compression spring, for example a leaf spring, can also work in conjunction with the end of the first swivelling arm on which the valve is fitted. In this case, this compression spring can be accommodated in the area of the pipe flange, pipe plate or intermediate plate in which the valve is located. The valve can shut off the debouchment of the pipe itself directly in the pipe flange or pipe plate, but it can also shut off, for example, an opening provided opposite this pipe debouchment in the pipe plate. During removal of the vessel, this can then remain closed if the connection between the pipe flange or pipe plate and the intermediate plate is detached, but not the connection between the intermediate plate and the vessel.

In another preferred embodiment the mechanical shifting elements are formed by a bar which is movable in its longitudinal direction and which essentially extends into the plane of the pipe flange or intermediate plate, and on one end of which the valve is fitted, while the other end is conveyed in a gastight fashion outside the pipe flange or intermediate plate and works here in conjunction with the above-mentioned stop. In this case the valve works together with a valve seat which is practically transverse to the plane of the pipe flange or intermediate plate and surrounds a passage between a space which is connected to the pipe and a space which debouches outside the pipe flange or intermediate plate. The bar can be surrounded by a compression or draw spring which pretensions the valve in the closing direction. The sealing elements can also be formed here by cylindrical, bellows sealed in a gastight fashion, through which part of the bar which is movable in its longitudinal direction extends, and whose free end is conveyed through a plate which closes off one end of the bellows, while the other end of the bellows is connected with the pipe flange or intermediate plate or herewith via a hollow connecting piece. The electromagnetic elements are here preferably formed by a coil which extends concentrically round the bar, and an annular armature which also extends concentrically round the bar, and which is moved through the magnetic field produced on excitation of the coil. The armature works in conjunction with a stop which holds the bar under spring tension in a position in which the valve is open, and which is pulled out of this position on movement of the armature, so that the valve can be closed.

The invention will now be explained in greater detail with reference to the drawings, in which a number of embodiments are shown.

Fig. 1 shows a top view of an embodiment of the invention, in which four parallel pipes are connected with a pipe flange;

Fig. 2 shows a cross section of this embodiment;

Fig. 3 shows a side view of the stop and the electromagnetic elements of this first embodiment;

Fig. 4 shows a cross section of another embodiment of the shutoff device according to the invention;

Fig. 5 shows a cross section of a similar embodiment to that in Fig. 4, with modified mechanical shifting elements;

Fig. 6 shows a similar embodiment to that in Fig. 5, with a different gastight passage;

Fig. 7 shows a cross section of yet another embodiment of the shutoff device according to the invention;

Figs. 8, 9 and 10 show another few variants for fitting of the valve relative to a driving rod for this valve.

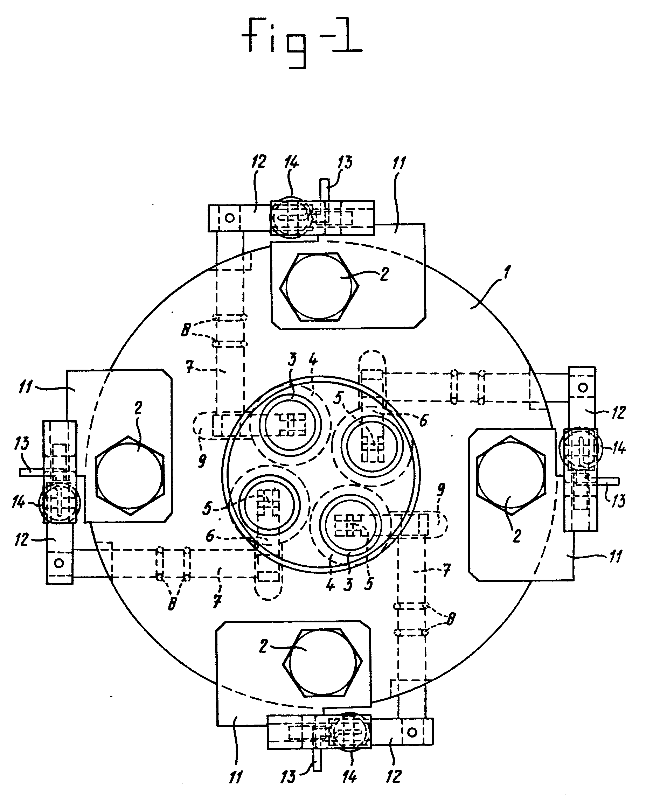

Fig. 1 shows a top view of the pipe flange 1, which is fastened with bolts 2 to a vessel which is not shown. Connected with this pipe flange are, for example, four pipes 3 standing close together. Each entrance to a pipe debouchment is provided with its own shutoff device according to the invention. Opposite each pipe debouchment there is here a valve 4. See also Fig. 2. This valve 4 is rotatably connected by means of a shaft 5 to one end of a first swivelling arm 6, whose other end is rigidly connected to a coupling rod or shaft 7 standing transversely to this swivelling arm 6.

The valve 4, the shaft 5, the first swivelling arm 6, the coupling shaft 7 and the sealing elements 8 therefor are illustrated by dotted lines in Fig. 1, because they are located under the top face of the pipe flange 1. A view of parts of them is shown in Fig. 2.

It can also be seen from this Fig. 2 that the shutoff device is accommodated in an intermediate plate 18. This intermediate plate 18 is provided with the necessary recesses 9 for the purpose, i.e. a large recess containing all debouchments, or a separate recess opposite each pipe. Located in the recess 9 are the valve 4 and the swivelling arm 6, and there is, of course, sufficient space to move the valve 4 from the closed position to the open position shown in Fig. 2. The recess 9 is provided on the bottom side with openings 25. The valve 4 can also shut off this opening 25 instead of the entrance to the pipe 3. In that case the valve has to be turned 180 degrees and also be shifted accordingly by the shifting elements, for the purpose of shutting off this opening 25.

The valve 4 is also provided with a sealing ring which is accommodated in a ring groove of the valve.

The intermediate plate 18 is clamped by means of bolts 2 between the pipe flange 1 and a housing or vessel not shown.

Figs. 1 and 3 show the magnetic elements and the stop operated by these magnetic elements. These magnetic elements are carried by a yoke 11, which is fitted here on the top face of the pipe flange 1, for example using bolts 2, by means of which this pipe flange is also fixed on a housing or vessel.

Fig. 1 also shows the second swivelling arm 12, which is fitted outside the flange 1 on the end of the coupling shaft 7. This swivelling arm 12 extends in roughly the same direction as the first swivelling arm 6, which is inside the intermediate plate 18.. The second swivelling arm 12 has on its free end a retaining element 13. It can also be seen from Fig. 3 that this second swivelling arm 12 is drawn upwards by a spring 14, while the first swivelling arm will also undergo the same displacement and the valve 4 with the sealing ring 10 is pressed against the debouchment of the pipe 3. This draw spring 14 is attached at its other end to a fixed point on the yoke 11.

The electromagnetic elements comprise a coil 15 and an armature 16. The armature 16 is provided at 17 with a projecting stop. In Fig. 3 the armature 16 is shown in the position in which it is drawn through excitation of the magnetic coil towards the yoke of said coil. In this position the valve 4 is closed by the spring 14. From this position of the second swivelling arm 12 and of the armature 16 it is clear from the outside that the valve 4 is in the closed position. Fig. 3 shows with dotted lines the positions of the armature 16 with stop 17 and the second swivelling arm 12 when the valve is open and the retaining element 13 is resting behind the stop 17 and is drawn against it by the spring 14. For the unlocking of the stop and closing of the valve the magnetic elements need only be fed a short electrical pulse.

When the valve has to be opened again, the second swivelling arm must be deliberately pressed down and the armature 16 must then be pushed to the left until the stop 17 can be pushed behind the projecting retaining element 13 of the second swivelling arm. The cam 17 can also be moved behind the retaining element 13 by means of spring elements acting on the armature 16. In that case the swivelling arm 12 need only be pressed down for reopening of the valve 4.

It can be seen from the above that once a valve is shut it cannot be reopened automatically, while it can be seen clearly from the position of the swivelling arm that the valve is actually closed.

A deliberate action must be executed to reopen it.

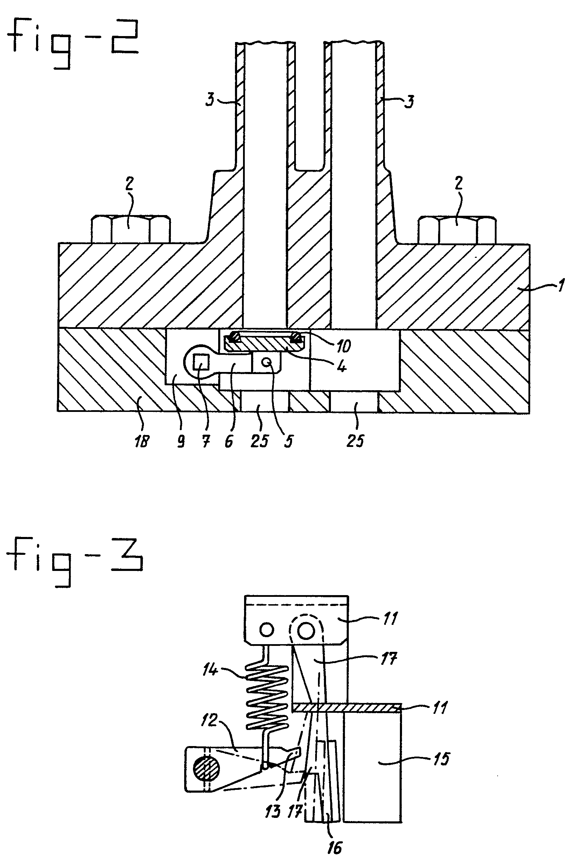

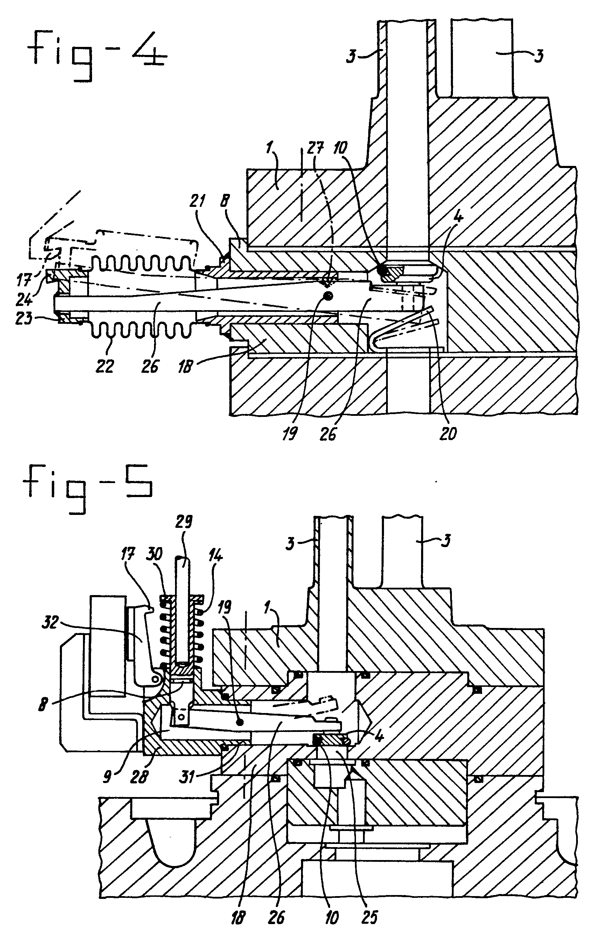

Fig. 4 shows a second embodiment of a shutoff device according to the invention.

In this embodiment the valve 4 is fitted on one end of an elongated straight swivelling arm 26, which is rotatably mounted at 19. Under the end of this swivelling arm 26, where the valve 4 is fitted, there is a curved leaf spring which can press the valve and the end of the swivelling arm 26 connected to it into the position in which the debouchment of the pipe is closed.

The swivelling arm 26 extends to the left beyond the intermediate plate 18 and is mounted in a separate concave connecting piece or cylinder 21 which can be pushed into a suitable bore in the intermediate plate 18. Thereafter this connecting piece is welded with a flange on the intermediate plate 18, so that a gastight seal is obtained. Welded onto the end of this connecting piece 21 which is beyond the intermediate plate 18 are flexible cylindrical bellows 22. Welded in a gastight fashion onto the other end of these bellows 22 is a sealing piece or plate 23, which is provided ith a retaining element 24. The swivelling arm 26 extends into a bore in this sealing plate 23 and is also welded in a gastight fashion onto it.

Through the freedom of movement afforded by the bellows 22, the swivelling arm 18 can be rotated or swivelled about the shaft 19.

The retaining element 24 can again work in conjunction with a stop 17 (only schematically illustrated) of the electromagetnic elements shown, for example, in Fig. 3, but in this case they have to be fixed in a different manner to the pipe flange 1 or intermediate plate 18.

Instead of rotating about the shaft 19, the swivelling arm 26 can also swivel in rocking fashion about, for example, an edge of a cam which forms part of the cylindrical part of the connecting piece 21 and rests in a groove of the swivelling arm 26, as illustrated by the dotted lines 27 on the top side of the swivelling arm 26.

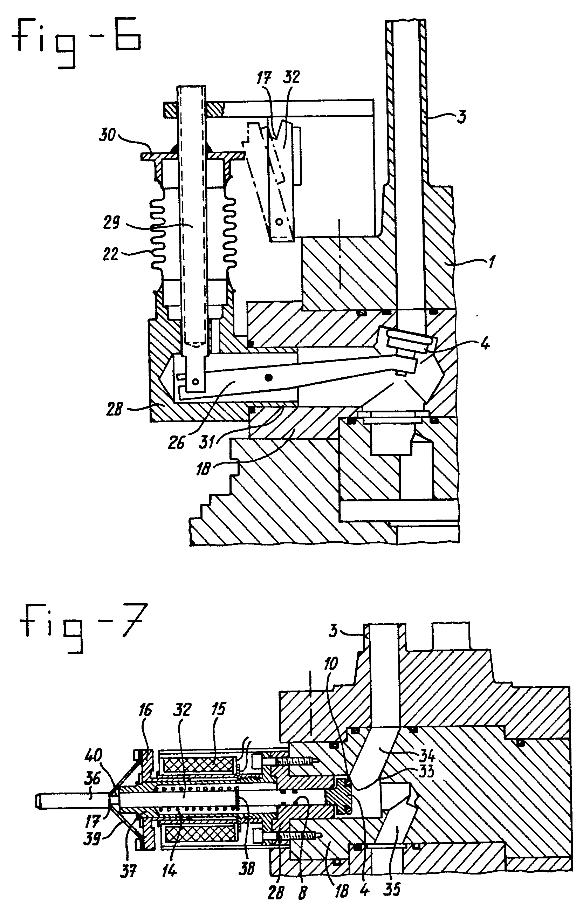

Fig. 5 shows a third embodiment of the shutoff device according to the invention, which shows some similarity with the shutoff device according to Fig. 4, but in this case the valve 4 is mounted on the bottom side of the swivelling arm 26, and the opening 25 is shut off.

The swivelling arm 26 is connected on the left to a bar 29 which is essentially transverse to said swivelling arm 26, and on the top side of which a flange 30 is mounted. Around this bar 29 is a compression or draw spring 14, which rests on the one side against the flange 30 and on the other against a top end of a concave extension piece 28 whose righthand cylindrical narrowed part 31 is pushed into the recess in the intermediate plate 18 in which the swivelling arm 26 and the valve are accommodated.

The bar 29 is conducted by means of sealing elements 8 through a bore which debouches transversely in a cavity 31 in the connecting piece 28. This connecting piece 28 is, of course, welded in gastight fashion to the intermediate plate 18.

When the bar 29 is pressed down by means of the flange 30, so that the arm 26 turns anticlockwise and the valve 4 is lifted from the opening 25, with the result that the entrance to the pipe 3 is opened, a stop 17, which is attached to an arm 32 can be pushed behind the flange 30, thereby causing the valve 4 to remain in the open position. The arm 32 is again connected to an armature 16 of an electromagnetic drive apparatus, which is not shown. If the valve 4 has to close off the passage 25, this arm 32 is pulled to the left by these electromagnetic elements, as a result of which the spring 14 pushes the flange 30 upwards, thereby causing the swivelling arm 26 to turn clockwise and the passage 25 to be shut off.

Fig. 6 shows a shutoff device similar to that of Fig. 5, but here the sealing elements 8 are replaced by cylindrical bellows 22, which are welded in a gastight fashion on the bottom side to the hollow extension piece 28, which is accommodated, again by means of a cylindrical part 31, in the intermediate plate 18 and is welded in a gastight fashion to it.

At its top end the bar 29 is welded in a gastight fashion on a flange 30, which is in turn connected in a gastight fashion to the top side of the bellows 22. Apart from the sealing function, these bellows 22 can take over the function of the spring 14. In this case the external pressure must, of course, be greater than the pressure inside the bellows and inside the recess in the intermediate plate 18 and in the pipes. Through this pressure the flange 30 is pressed downwards, and the valve 4 is pressed against the debouchment of the pipe 3 as soon as the stop 17 is drawn away.

Shown at 32 is an arm which is connected to an armature of the electromagnetic elements. This arm has at 17 the earlier-mentioned stop. When the valve 4 has to be opened again, the flange can be drawn upwards by means of the extension piece on the top of the bar 29. When the flange 4 passes the stop 17, the arm 32 can be pressed to the left, following which the stop 17 will again hold the edge of the flange 30 until the arm 32 is attracted again by the electromagnetic elements. Through the pressure on the bellows 22 and the flange 30 from the outside air, the valve 4 is then shut again. Instead of the bellows, or as an addition, a compression or draw spring can, of course, be used for closing the valve 4. It can then work, for example, on the top side of the flange 30.

0164171

Fig. 7 shows yet another embodiment of the emergency shutoff device according to the invention.

In this case the valve is mounted on one end of a push bar 32, which is conveyed through a bore in an extension piece 28, which is in turn pushed into a recess in the intermediate plate 18 and welded to it.

This intermediate plate 18 is provided with a valve seat 33, which encloses a passage to a space 34 which is connected with the pipe 3 of the pipe flange, and a space 35 which leads downwards and can be connected here to a passage to a vessel or housing to be connected. Instead of being positioned in the longitudinal direction of the pipe 3, the valve 4 is in this case therefore placed transversely to said direction.

The push bar 32 runs to the left and emerges on the outside at 36.

Through this end 36 the position of the valve 4 can be observed from the outside, and the valve can be opened again by pulling this end 36 to the left.

The push bar 32 is coaxially surrounded by a compression spring 14, a coil 15 of the electromagnetic elements and an armature 16. This armature is mounted on a cylindrical part 37 which fits in sliding fashion round the push bar 32. Against the inside end of this cylindrical part 37 rests the compression spring 14, whose other end presses against a ring 38, which is attached on the push bar 32.

Working together with the armature 16 is a stop element 39, whose left end forms the stop 17 for holding the valve 4 in the open position.

As can be seen from Fig. 7, this end of the element 39 which forms the stop 17 rests against the shoulder of an annular groove 40 in the push bar 32.

When the magnetic coil is briefly excited, the armature 16 is attracted and with it the stop element 39 fixed to the armature 16. It is thereby drawn out of the annular groove 40 into the push bar 32, following which the latter can be moved by the spring 14 to the right and the passage can be shut off by the valve 4.

As can also be seen from Fig. 7, the part of the shutoff device with the coil, spring, armature and push bar 32 projects from the intermediate plate 18. With the use of, for example, three pipes, these parts can project radially from a, for example, round intermediate plate 18. This embodiment, in which all parts are also fixed on the intermediate plate 18, makes simple replacement possible.

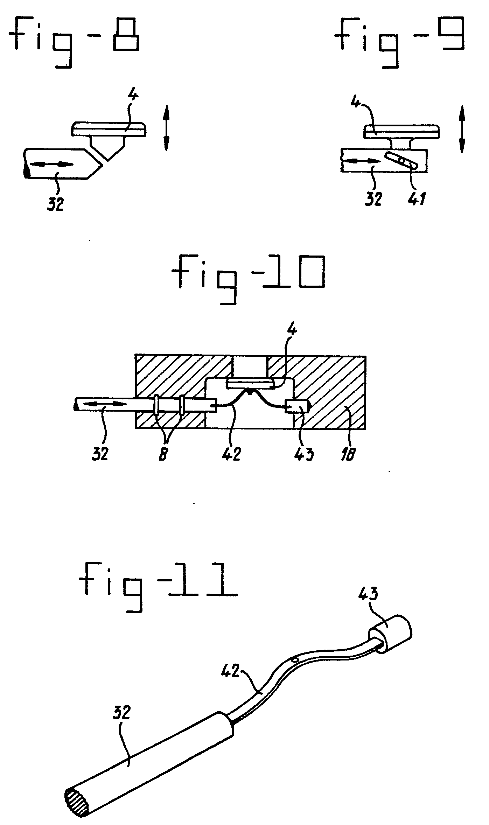

Figs. 8, 9, 10 and 11 show variants of the working together of the valve 4 and a push bar 32, which can be used, for example in the embodiment according to Fig. 7.

In Fig. 8 the end of the push bar 32 is provided with a bevelled part which works together with a slanting part of a stop which is fixed to the bottom side of the valve 4. When the push bar 32 slides to the right the valve 4 is thereby moved upwards. Provision can be made between this valve 4 and a valve seat (not shown) round the debouchment of a pipe (not shown either) for a compression spring which moves the valve 4 downwards again when the bar 32 is drawn to the left.

Fig. 9 shows a variant of the embodiment according to Fig. 8. Here, a bar attached to the bottom side of the valve 4 is provided with a transverse pin which extends through a groove 41 in the push bar 32. The end of the push bar 32 can be, for example, forked, so that a tooth of the fork is on either side of the bar fixed on the bottom side of the valve 4. Each tooth is then provided with a recess 41.

Here again, the valve will be moved up and down depending on whether the push bar 32 is moved to the right or to the left.

Figs. 10 and 11 again shown another variant for operating the valve 4 if a radially movable push bar 32 is used.

In this case, a leaf spring 42 is clamped between the right end of the push bar 32 and a bar part 43 which is mounted in a bore in the wall of the recess for the valve 4 opposite the end of the bar 32. This spring is curved upwards, and in the middle of this compression spring 42 the valve 4 is mounted. When the push bar 32 is pushed to the right, the leaf spring 32 will become more convex, as a result of which the valve 4 is pressed against the seat of the top opening and thereby shuts the latter off. This leaf spring 42 can take over the function of the spring which has to open the valve 4 again when the bar 32 is pushed to the left.

It goes without saying that the invention is not restricted to the embodiments discussed above and those shown in the drawings, but that modifications and additions are possible without going beyond the scope of the invention.

## Claims

1. Shutoff device for at least one pipe, where the latter debouches into a pipe flange, characterised by:

a movable valve which can close and open the entrance to the debouchment of the pipe into the pipe flange;

mechanical shifting elements for the valve, which can be locked against spring force in a position in which the valve is open;

electromagnetic elements which can remove the locking of the mechanical elements and of the valve;

in which the valve, the mechanical shifting elements and the electromagnetic elements are carried by and at least partially accommodated in the pipe flange or in an intermediate plate fitted against it, and means are present to permit observation of the position of the valve from the outside and to permit deliberate opening thereof again after it has been taken to the closed position through excitation of the electromagnetic elements.

2. Shutoff device according to Claim 1, characterised in that the mechanical shifting elements can be locked here by means of a stop, and this stop can be shifted by the electromagnetic elements, with the stop being drawn out of the locked position and the valve being pressed through spring force against the entrance to the pipe debouchment, thereby shutting off this entrance.

3. Shutoff device according to Claim 2, characterised in that for opening of the valve the mechanical shifting elements have to be pressed by hand against spring force past the cam.

4. Shutoff device according to Claims 1-3, characterised in that the mechanical shifting elements are formed by a swivelling arm which can swivel or rotate in an intermediate point, and on one end of which is mounted the valve which through the swivelling of the swivelling arm can shut off the entrance to the pipe debouchment, said swivelling arm extending into a recess situated in the face of the pipe flange or intermediate plate and being conveyed out by sealing elements, where the free end of the swivelling arm is retained by the stop, which is controlled by the electromagnetic elements.

5. Shutoff device according to Claim 4, characterised in that the sealing elements are formed by cylindrical bellows sealed in a gastight fashion,through which the swivelling arm extends axially and its free end is connected to a shutoff plate which seals in a gastight fashion mounted in one end of the cylindrical bellows, whose other end is connected gastight with the pipe flange or intermediate plate or with a gastight hollow connecting piece connected herewith.

6. Shutoff device according to Claim 4, characterised in that the free end of the swivelling arm is connected to a bar which is fitted transversely to the swivelling arm, and which can be moved in its longitudinal direction for swivelling of the swivelling arm, and which is taken in a gastight fashion to the outside through a bore in a wall which debouches in the recess for the swivelling arm.

7. Shutoff device according to Claim 6, characterised in that the bore for the bar is provided in a hollow connecting piece fitted so as to be gastight on the pipe flange or intermediate plate, and whose cavity is in line with the recess for the swivelling arm.

8. Shutoff device according to Claim 4, characterised in that the free end of the swivelling arm is connected to a bar which is fitted transversely to the swivelling arm, and which in its free end can be shifted in its longitudinal direction for the swivelling of the swivelling arm, and which is taken in a gastight fashion to the outside through cylindrical bellows sealed in a gastight fashion through which the bar extends axially, and the free end of which being connected to a shutoff plate which closes in a gastight fashion and which is mounted in one end of the cylindrical bellows, which in their other end are connected in a gastight fashion to a concave connecting piece, which is mounted in a gastight fashion on the pipe flange or intermediate plate and whose cavity is in line with the recess for the swivelling arm, the bellows being virtually at right angles to the longitudinal direction of this cavity.

9. Shutoff device according to any of Claims 6 – 8, characterised in that the free end of the bar works in conjunction with the stop of the electromagnetic elements.

10. Shutoff device according to any of Claims 6 – 8, characterised by a compression or draw spring which is situated around the said bar and pretensions it in a direction in which the valve is closed.

11. Shutoff device according to any of Claims 1 – 3, characterised in that the valve works in conjunction with an end of a first swivelling arm, whose other end is rigidly connected to a rotating coupling shaft transverse to this first swivelling arm, so that through the rotation of said coupling shaft the first swivelling arm can execute a swivel movement for the desired movement of the valve to the closed position or the open position, said rotating coupling shaft being taken via sealing elements outside the pipe flange, pipe plate or intermediate plate, and in its external end being rigidly connected to a second swivelling arm whose free end works in conjunction with a movable stop and by means of said stop can be held against spring force in a position in which the valve is open, said stop being capable of being pulled by the above-mentioned electromagnetic elements out of the retaining position, in which case the spring elements can move the above-mentioned assembly of swivelling arm, valve and rotating coupling shaft to a position in which the entrance to the debouchment of the pipe is shut off.

12. Shutoff device according to any of Claims 1 - 3, characterised in that the mechanical shifting elements are formed by a bar which is movable in its longitudinal direction and which essentially extends in the plane of the pipe flange or intermediate plate, and whose one end works in conjunction with the valve, while the other end is conveyed in a gastight fashion outside the pipe flange or intermediate plate and works here in conjunction with the above-mentioned stop.

13. Shutoff device according to Claim 12, characterised in that the valve works together with a valve seat which is practically transverse to the plane of the pipe flange or intermediate plate and forms a passage between a space which is connected with the pipe and a space which debouches outside the pipe flange or intermediate plate.

14. Shutoff device according to Claim 12 or 13 characterised in that the bar is surrounded by a compression or draw spring which pretensions the valve in the closing direction.

15. Shutoff device according to Claim 12 - 14, characterised in that the sealing elements are formed by cylindrical bellows sealed in a gastight fashion, through which part of the bar which is movable in its longitudinal direction extends, and whose free end is connected to a shutoff plate which seals in a gastight manner and which is mounted in one end of the cylindrical bellows, while the other end of the cylindrical bellows is connected in a gastight fashion to the pipe flange or intermediate plate or to a hollowconnecting piece connected herewith.

16. Shutoff device according to any of Claims 12 - 15, characterised in that the electromagnetic elements are formed by a coil which extends round the bar, and by an annular armature which also extends round the bar, and which on excitation of the coil is moved through the magnetic field produced, said armature being connected to the stop which holds the bar against spring force in a position in which the valve is opened, and which is pulled out of this position on movement of the armature, so that the valve can be closed.

17. Shutoff device according to any of Claims 4- 16, characterised in that the spring elements are formed by a compression or draw spring which is connected at the one side with one end of a swivelling arm and at the other side with a fixed point of the pipe flange or intermediate plate.

18. Shutoff device according to any of Claims 4- 16, characterised in that the spring elements are formed by a compression spring which is situated in a recess in the pipe flange or intermediate plate and is connected on one side with the valve and on the other side is retained by a shoulder of the pipe flange or intermediate plate.

19. Shutoff device according to any of Claims 4- 16, characterised in that the electromagnetic elements comprise an electrical coil, a core, a yoke and an armature which is movable on excitation of the coil, and to which the said stop for retaining the shifting elements is connected.

20. Shutoff device according to any of the preceding claims, characterised in that the valve, the mechanical shifting elements and the magnetic elements are mounted on a separate connecting piece which can be mounted on the pipe flange or intermediate plate, and which seals in a gastight fashion the recess hereof for the valve and the arm or bar carrying said valve.

21. Shutoff device according to any of the preceding claims, characterised in that the intermediate plate is mounted between the said pipe flange and the wall of a vessel or housing connected to the pipe flange.

22. Shutoff device according to any of the preceding claims, characterised in that the valve is rotatably mounted relative to the end of the swivelling arm or bar.

23. Shutoff device according to any of Claims 1 - 20, characterised in that elements are provided to move the valve transversely to the direction of movement of the swivelling arm working in conjunction with the valve.

24. Pipe flange with several pipes connected to said flange, characterised in that for each pipe a shutoff device is mounted according to one of the preceding claims.

25. Intermediate plate for a pipe flange with several pipes connected to said flange, characterised in that the intermediate plate can be mounted against the pipe flange, and for each pipe there is a recess and a shutoff device according to any of Claims 1 to 13, whose valve is located in the said recess and can shut off herein a passage to the pipe.

****

0164171

1/5

fig-1

0164171

215

fig-2

fig-3

fig-4

fig-5

Fig-6

Fig-7

fig-8

fig-9

fig-10

fig-11

## European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 817 283 (HEWSON)<br>* Whole document * | 1 | F 16 L 41/08<br>F 16 K 31/06<br>F 16 K 27/00 |
| A | US-A-3 134 271 (RAY)<br>* Whole document * | 1-4,19 | |
| A | US-A-2 875 617 (MURPHY)<br><br>* Whole document * | 1,2,3,<br>12,13,<br>14,19 | |
| A | FR-A-1 421 500 (ECLIPSE FUEL)<br><br>* Whole document * | 1,2,12<br>-14,19 | |

| | |
|---|---|
| | TECHNICAL FIELDS SEARCHED (Int. Cl.4) |
| | F 16 K<br>F 16 L |

The present search report has been drawn up for all claims

| Place of search | Date of completion of the search | Examiner |
|---|---|---|
| THE HAGUE | 13-08-1985 | VERELST P.E.J. |